# EUROPEAN PATENT SPECIFICATION

(11) **EP 3 039 526 B1**
(45) Date of publication and mention of the grant of the patent: **11.11.2020**
(21) Application number: 14752642.0
(22) Date of filing: 19.08.2014
(51) Int. Cl.: G06F 3/12

(54) **METHOD FOR TRACKING OF INTERMEDIATE PRODUCTS IN A PRINTING SYSTEM**
VERFAHREN ZUM VERFOLGEN VON ZWISCHENPRODUKTEN IN EINEM DRUCKSYSTEM
PROCÉDÉ DE SUIVI DE PRODUITS INTERMÉDIAIRES DANS UN SYSTÈME D'IMPRESSION

(30) Priority: 27.08.2013 EP 13181779
(43) Date of publication of application: 06.07.2016
(73) Proprietor: Canon Production Printing Netherlands B.V., 5914 CA Venlo (NL)
(72) Inventor: DE BOER, Taco M., NL-5836 BJ Sambeek (NL)
(74) Representative: Canon Production Printing IP Department
(86) International application number: PCT/EP2014/067638
(87) International publication number: WO 2015/028350

(56) References cited:
- US-A1- 2009 279 120
- US-A1- 2012 140 274
- US-A1- 2012 200 865
- US-A1- 2012 268 772
- US-A1- 2013 070 296

## Description

### FIELD OF THE INVENTION

The invention relates to a method for processing a print job according to print job specifications by means of production steps on a printing system, the printing system comprising a plurality of production modules and a user interface, each production module performing a production step in order to deliver a resulting product of the production step, the method comprises the steps of performing a production step by means of a production module of the plurality of production modules delivering the resulting product.

In a print production environment the production of a print job can be managed at the printing system comprising a software system that handles the image data to be printed according to specifications of the print job, schedules the actions to be performed by operators and provides status feedback on the production progress to the production manager and - for example through the internet - to the end customers. The software system may be installed at the printing system or on a computer system connected to the printing system.

An end product of the print job may be a document on paper or a document on any other media type. Specifications of the print job, such as properties of the end product, are submitted by means of a product order or job ticket to the printing system. The print job specifications are interpreted by the printing system before the production of the print job starts. The print job may be printed on media which is an input holder of a printer being part of the printing system and the printed media may be finished with finishing equipment being part of the printing system. The finishing steps may be part of the sequence of production steps which lead to an end product. The user interface of the printing system may be a local user interface at the printing system, a remote user interface at a computer system like a personal computer, a laptop computer, a tablet computer, a personal digital assistant etc., connected via a network - wired or wireless - to the printing system, or a remote user interface at a mobile device connected via a network - wired or wireless, direct or indirect - to the printing system. The mobile device comprising the remote user interface may be a mobile phone, a smart phone, a tablet computer, a smart watch or smart glasses. Also the user interface may be a print out or hard copy for the operator with operator instructions.

The invention further relates to a computer program product, including computer readable code embodied on a computer readable medium, said computer readable code comprising instructions for printing a print product according to the method of the invention.

The invention also relates to a printing system configured to print a print job according to the method of the invention.

### BACKGROUND OF THE INVENTION

Nowadays status feedback or tracking information is given by a textual description or a generic icon at the user interface of the printing system to describe resulting products in a sequence of production steps. However, for an operator in a production environment where production exists of several steps and where the end product is non-standardized, but even personalised, identification of the correct intermediate product among a number of intermediate products awaiting further processing is not always straightforward. This way of working may lead to errors.

US 2012/0140274 describes a case where post-process work instructions are output for respective jobs. The number of work instructions to be managed by a worker increases, resulting in a work efficiency drop. Hence, a job control apparatus of this invention groups jobs having identical post-processes, and integrates post-processes having common settings based on setting information of the grouped post-processes. At the time of execution of job processing, one physical job ticket is issued for each integrated post-process.

It is an objective of the invention to facilitate an easier way of working for the operator when printing a print job and picking the correct resulting products.

### SUMMARY OF THE INVENTION

According to the present invention this objective is achieved by a method according to claim 1.

With knowledge of the exact properties of the end product and the impact of the production steps on the visual appearance of the intermediate products, a real-life perspective image is computed according to the print job specifications. The real-life perspective image resembles the visual appearance of the resulting product after a production step. The real-life perspective image is then displayed at the user interface of the printing system. The displayed real-life perspective images are used to help the operator to recognize and identify which resulting products should be used in which production steps, and to visualize the progress of the production of the print job. The real-life perspective images may be constructed and/or displayed before the start of the print job. However, if not all specifications of the resulting products are known beforehand, or not all settings for the resulting product resulting from a production step are pre-defined or pre-selected, or if not all settings are known before the actual production step is started on the corresponding production module, the real-life perspective images may be generated after the production step has been started and taking into account settings, i.e. production step parameters which are selected, for example defaulted, in the production step which is going to be carried out.
In case the user interface is a printer for printing a hardcopy of work instructions for the operator, the displaying of the real-life perspective image is realised by printing the real-life perspective image on the hard copy.

According to an embodiment each production module comprises input means for receiving the resulting product delivered by the preceding production module, and the real-life perspective image of the resulting product comprises a real-life perspective image of the input means of the production module for which the resulting product is input.
By showing the input means of the production module, the operator becomes aware of the location at the production module at which he has to put in the resulting product.

According to a further aspect the real-life perspective image comprises instructions for the operator how to input the resulting product in the input means and what settings should be entered at the production module having the input means. The resulting product may be input into the input means in several ways, for example different kind of orientation of a roll of paper, face-down input of printed material, face-up input of printed material, short side input of the media, long side input of the material etc. The operator can also enter settings for establishing the correct production, like single sided printing, double-sided printing, inline stapling, entering margins, magnification, selection of tray, selection of binding material, resolution, printing mode, print velocity etc.

According to an embodiment each production module comprises output means, and the real-life perspective image of the resulting product comprises a real-life perspective image of the output means of the production module which has produced the resulting product. By showing the output means, the operator becomes aware of the location where he can find the resulting product produced by the production module. This is advantageous when the production module has a plurality of output means, or the production module is occupying a large amount of floor space.

According to an embodiment the step of displaying the real-life perspective image on the user interface for the production step, is before the start of the print job. The construction of the real-life perspective image for the production step takes place before the start of the job if all job specifications are known beforehand.

According to an embodiment the step of displaying the real-life perspective image on the user interface for the production step, is during the production of the print job. This is advantageous, if alternative specifications have to be applied due to mismatching job specifications. The real-life perspective image of a resulting product is constructed when the production module is started to produce the resulting product. Just before the start of the production step the real-time image according to alternative specifications may be constructed and shown at the user interface. In this way the operator still has the opportunity to accept the alternative specifications and let start the production step or to reject the alternative specifications and abort the production step.

According to an embodiment the real-life perspective image of the resulting product comprises at least one image out of a group of an image comprising actual content to be printed on the first page of the print job, an image comprising actual content to be printed on the last page of the print job, an image comprising a medium on which the print job is printed, the medium comprising an image of actual content to be printed according to the print job, which content is visible when the corresponding resulting product is delivered, an image of a finishing element and an image of a carrier by which at least part of the printed print job is carried.
It is very important that the real-life perspective image resembles the resulting product as much as possible in order to easily identify the correct intermediate product.

According to a further aspect of the method the dimensions of the real-life perspective image of the resulting product are proportional to dimensions specified by the print job specifications. Especially a width, a length, a height (stack height for example) or a diameter of the resulting product have to be in proportion with reality after the production step. The real-life perspective image with dimensions according to reality leads to an easy recognition and identification of the resulting product by the operator. In case of a cut sheet resulting product the stack height of the resulting product in the real-life perspective image represents the number of sheets of the print job. The stack height of the resulting product in the real-life perspective image is also in accordance with the type of media used. For example, when a thick medium is used for a job of 80 sheets, the stack height will be larger in the real-life perspective image than the stack height in the real-life perspective image, when a thin medium is used for the same job of 80 sheets.

According to another embodiment the user interface is a printer for printing a hardcopy and the real-life perspective image is printed on the hardcopy. For a production step a hardcopy may be printed showing the real-life perspective image. Real-life perspective image of several resulting products may be collected on at least one hardcopy. The hardcopy may also contain further operator instructions.

The invention also relates to a software medium comprising executable program code configured to, when executed, perform the method according to the invention.

The invention also relates to a printing system according to claim 11.

### BRIEF DESCRIPTION OF THE DRAWINGS

Hereinafter the present invention is further elucidated with references to the appended drawings showing non-limiting embodiments and wherein:
- Fig. 1: is a print system configured to apply the invented method;
- Fig. 2 - 4: show real-life perspective images of resulting products from the print system a shown in Fig. 1;
- Fig. 5A: shows a production process according to the invention;
- Fig. 5B - 5D: show real-life perspective images of resulting products of the production process of Fig. 5A;
- Fig. 6A: shows a real-life perspective image comprising a resulting product and input means of a next production module according to the invention;
- Fig. 6B: shows a real-life perspective image comprising the resulting product, corresponding input means and corresponding output means according to the invention; and
- Fig. 7 - 8: are flow diagrams of embodiments of the method according to the invention.

### DETAILED DESCRIPTION OF EMBODIMENTS

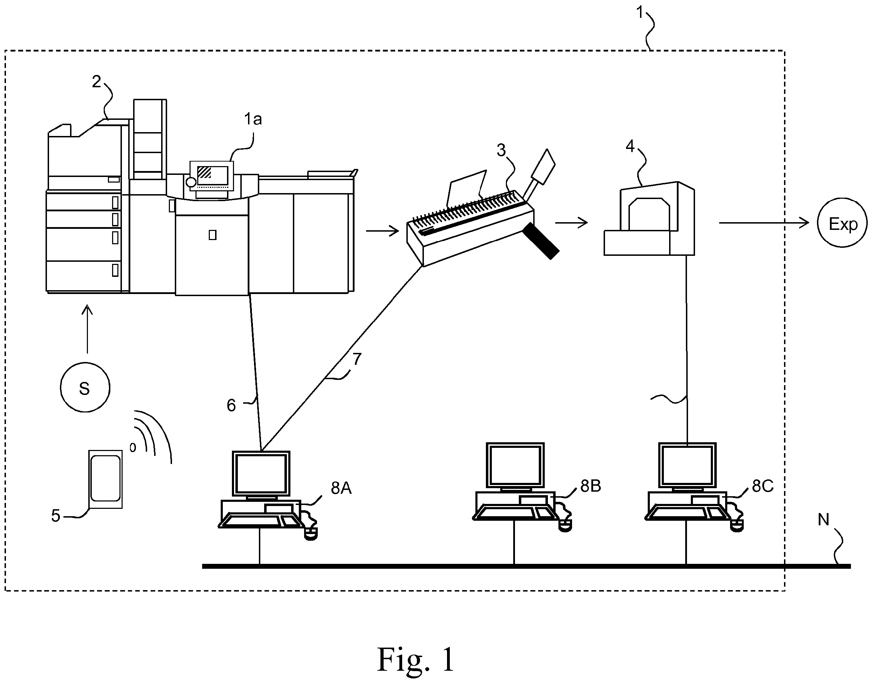

Fig. 1 is a print system 1 comprising a number of workstations 8B, 8C, which may be personal computers or other devices for preparing image data for prints to be printed. These workstations have access to a network N for transferring the image data to a print controller 8A that is configured to receive print jobs for prints and derive partial images if needed. The print controller 8A controls the printing process of a first production module 2, which is a print engine 2. The print controller 8A and the print engine 2 is part of the print system 1. The print engine 2 is suitable for applying recording material on media in order to print a print job on a media. The print engine 2 is connected to the print controller 8A via a network line 6. The print engine 2 may have the print controller 8A inside. The print engine may have a local user interface 1a for enabling an operator to enter or read information, like selections or instructions. According to this embodiment the print system 1 also comprises a mobile device 5 which is wireless connected to the print controller 8A. The mobile device 5 comprises a user interface for displaying a real-life perspective image according to the method of the invention. The user interface according to the invention may reside on at least one or the mobile device 5, the local user interface 1a, the printer controller 8A, the workstations 8B and the workstation 8C. Since all these devices are connected to the network N, images shown at their user interface according to the invention may be synchronised. The print system 1 further comprises a second production module 3 which is a puncher 3, and a third production module 4 which is a binder 4. It is noted that the first production module 2, the second production module 3 and the third production module 4 are arbitrarily selected and other production modules may be envisioned which form a configurable plurality of production modules in order to produce an end product via resulting products. As a starting point S the print job data and the print job specifications are submitted to the print controller 8A. The print controller 8A sends the job information to the print engine 2. The print engine 2 delivers in a first production step a first resulting product, being a media on which the image or images specified in the print job specifications will be printed. The first resulting product is input for the puncher 3. The puncher 3 delivers in a second production step a second resulting product, a printed media with holes. The second resulting product is input for the binder 4. The binder 4 delivers in a third production step a third resulting product, a bound printed media with holes. In this example the third resulting product is end product of the print system 1 and is delivered to an expedition department Exp.

According to the method of the invention a real-life perspective image is constructed for each production step in order to display this real-life perspective image on at least one user interface of the print system 1.

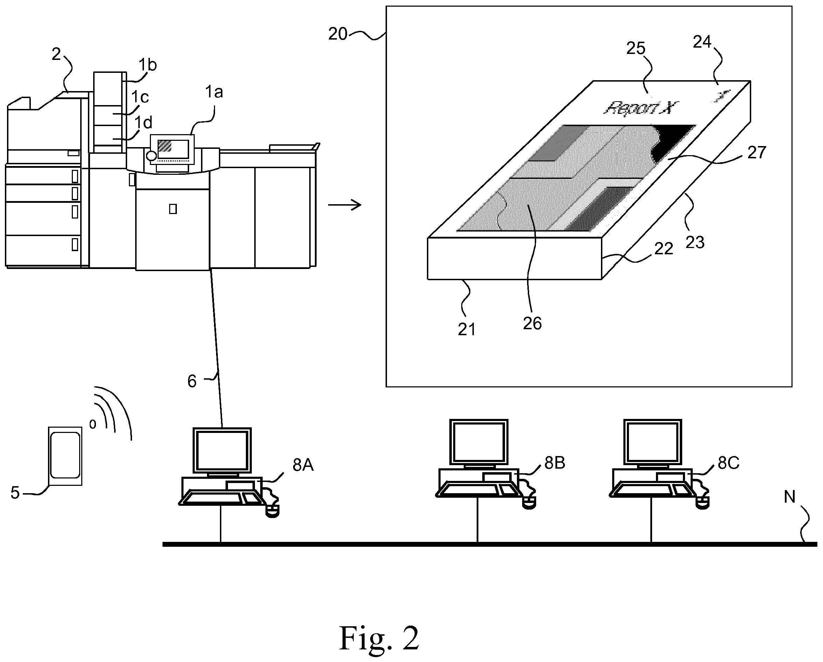

Fig. 2 - 6 show real-life perspective images of resulting products according to a workflow on the print system as shown in Fig. 1. It is assumed that the job specifications are known to are known to the print system 1 before the processing of the print job. It is therefore assumed that the real-life perspective images are constructed before the start of the print job.

Fig. 2 shows the first production module, the print engine 2 and a first real-life perspective image 20 of the first resulting product to be produced by the print engine 2. The real-life perspective image 20 comprises an image in perspective view representing a stack of cut sheets having a height 22, a width 21 and a length 23. The sizes of the height 22, the width 21 and the length 23 are in accordance with the job specifications, for example, the format of the print job (A4, A3, etc.), the weight and/or thickness of the media, and the number of sheets of the print job. The visible upper sheet is according to its real appearance. In this example the visible upper sheet contains an image 26 of a colour palette, a title block 25, a page number 24 and, amongst other margins, a right margin 27. By displaying the content of the first page which is visible when the first resulting product is delivered by the print engine 2, the operator can easily retrieve - after the first production step - the correct stack of sheets for performing the further production steps. The first resulting product may be retrieved from one of a plurality of output bins 1b, 1c, 1d, or, if already taken out of one of the output bins from a gathering stock location for laying off resulting products.

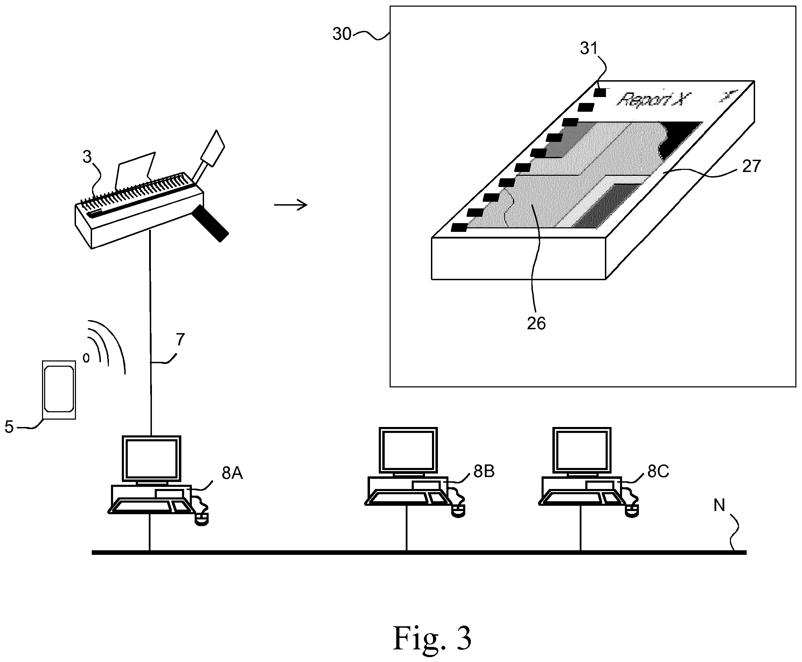

Fig. 3 shows the second production module, the puncher 3 and a second real-life perspective image 30 of the second resulting product to be produced by the puncher 3. The second real life image 30 resembles the first real-life perspective image 20 except that the second real life image additionally comprises a plurality of sub-images 31 representing the holes 31 made by the puncher 3. The number of holes 31 visible on the second real-life perspective image 30 is in accordance with the print job specifications with respect to the puncher 3.
The second real-life perspective image 30 is shown at the user interface of the print system. Real-life perspective images according to the invention may be shown for each print job in the print queue, which print job is selected by the operator.

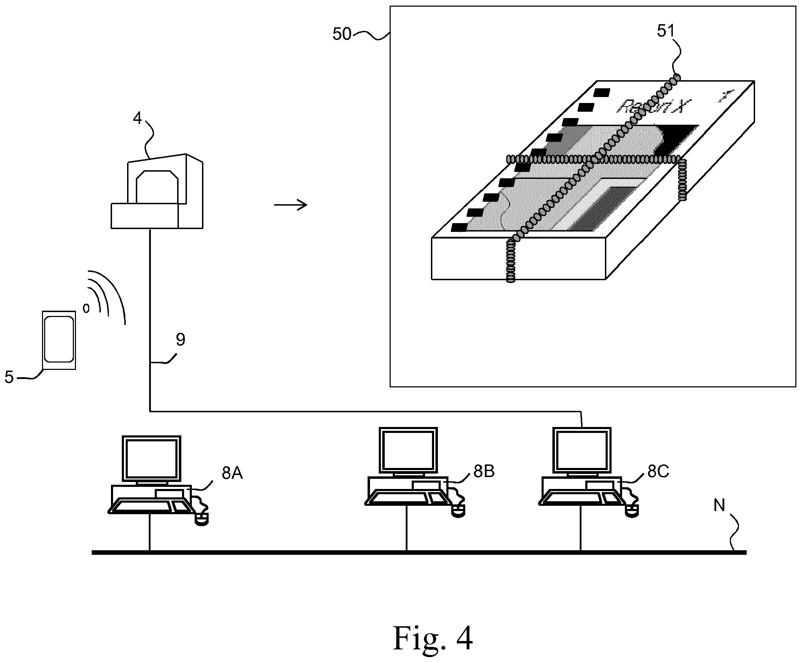

Fig. 4 shows the third production module 4, the binder 4 and a third real-life perspective image 50 of the third resulting product to be produced by the binder 4. Since the binder 4 is the last production module in the chain of production modules, the third resulting product is also the end product of the print job. The third real life image 50 resembles the second real-life perspective image 30 except that the third real life image 50 additionally comprises a binding cord 51 at a position wrapped around the pack of sheets. The position and width of the binding cord 51 is determined by the job specifications with respect to the binder 4. The third real-life perspective image 50 is suitable for a quick recognition, identification and retrieval of the third resulting product by the operator for further steps like packaging or expedition.

Production steps of printing, copying, stapling, punching, stitching, binding, trimming, enveloping, packaging, sealing, folding, page inserting, cutting, sorting, laminating, varnishing may be envisioned in the print system according to the invention. The real-life perspective images may be ordered in a list which is scrollable or swipable in case of a touch screen user interface.

According to another embodiment real-life perspective images of resulting products are shown according to a workflow on the print system as shown in Fig. 1. It is assumed that the job specifications are known to the print system 1, but the settings of the production modules 2, 3, 4 are not known to the print controller 8A before the processing of the print job on the specific production module. It is therefore assumed that the real-life perspective images are constructed during the processing of the print job.

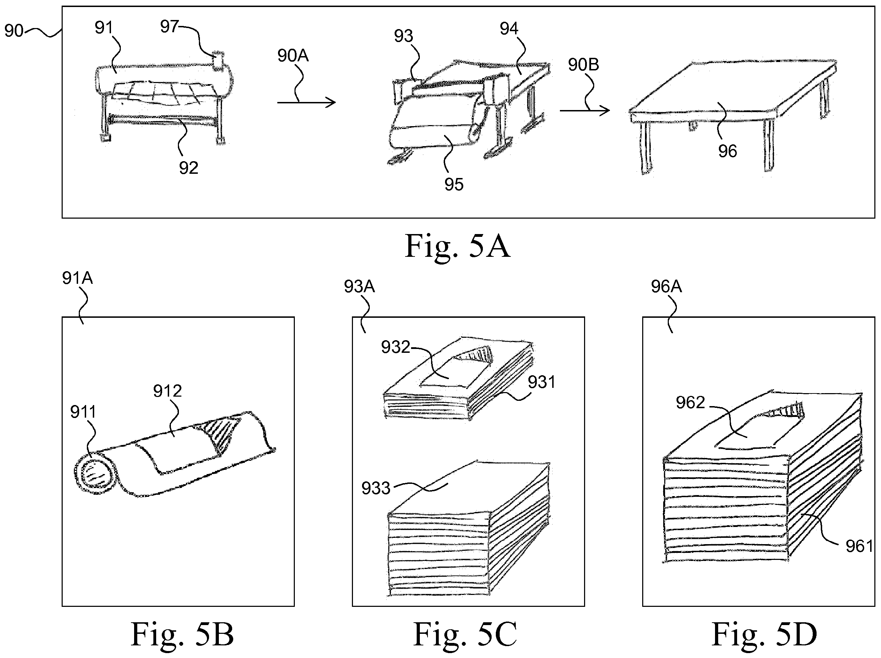

Fig. 5A shows a production environment 90 according to the invention. The production environment consists of a wide format printer 91, an automatic cutter 93 and a large flat table 96. The wide format printer 91 is equipped with a user interface screen 97 and a roll-up unit 92 for rolling up printed material from a roll of media. The automatic cutter 93 is equipped with a hang-up unit 95 for hanging up rolled up printed material and a flat surface 94 for laying off cut material. The automatic cutter 93 is configured to cut a roll of printed material into separate sheets. The large flat table 96 is used by the operator to work with large materials such as sheets, panels, banners etc. A first arrow 90A indicates that a roll printed on the wide format printer 91 may be transported to the automatic cutter 93. A second arrow 90B indicates that cut material may be transported from the automatic cutter 93 to the large flat table 96.

Fig. 5B - 5D show real-life perspective images of the production process of Fig. 5A. According to a first production step several images are printed by means of the wide format printer 91 onto self-adhesive media on a roll. The roll is rolled up by the roll-up unit 92. After printing on the roll the roll is taken off the roll-up unit 92 and for example transported to a storage compartment.
Fig. 5B shows a first real-life perspective image 91A showing the roll 911 with one image 912 of the several printed images. The one image 912 is visible on the roll 911 as according to the reality. The operator is able to identify the roll 911 in a storage compartment or any other location by means of the real-life perspective image 91A. After the first production step the operator's handheld device, workstation monitor or pre-printed work order form will show the first real-life perspective image 91A with an indication that the operator has to look for the roll 911 and has to load it into the automatic cutter 93 for the second production step.
According to a second production step the roll 911 is loaded into the hang-up unit 95 of the automatic cutter 93. The automatic cutter 93 is started in order to cut the roll into separate sheets 94.
Fig. 5C shows a second real-life perspective image 93A showing the separate sheets 94 in a pile 931. The upper sheet of the pile 931 displays the image 932 printed on the first sheet cut off from the roll 911. The image 932 equals the image 912 visible on the first real-life perspective image 91A. The real-life perspective image 93A also shows a pile 933 of rigid boards. The operator needs the pile of sheets 931 and the pile of rigid boards 933 in order to process the next step in the production process. The operator is able to identify the pile 931 and the pile 933 from the storage compartment or any other storing location by means of the second real-life perspective image 93A. After the second production step the operator's handheld device, workstation monitor or pre-printed work order form will show the second real-life perspective image 93A with an indication that the operator has to look for the pile of sheets 931 produced by the automatic cutter 93 and also has to fetch a pile of rigid boards 933 for the third production step.
According to a third production step the pile of sheets 931 and a matching number of rigid boards from the pile of rigid boards 933 is taken to the large flat table 96. One by one the operator applies a sheet of self-adhesive material from the pile 931 to a rigid board and repeats the application for each sheet from the pile 931.
Fig. 5D shows a third real-life perspective image 96A showing a pile 961 of rigid boards provided with the self-adhesive material. The self-adhesive material is printed upon in the first production step. The third real-life perspective image 96A shows the first rigid board of the pile 961 comprising the printed image 962 which is equal to the image 932 on the second real-life perspective image 93A. The operator needs the pile of rigid boards 961 in order to further process the pile of rigid boards 961, for example packaging the pile 961 by means of a packaging machine (not shown) before dispatching the packaged pile 961 to a shipping department.
After the third production step the operator's handheld device, workstation monitor or pre-printed work order form will show the third real-life perspective image 96A with an indication that the operator has to package the pile 961 and bring the packaged pile 961 to the shipping department. The operator is able to identify the pile 961 from the storage compartment or any other storing location by means of the third real-life perspective image 96A.

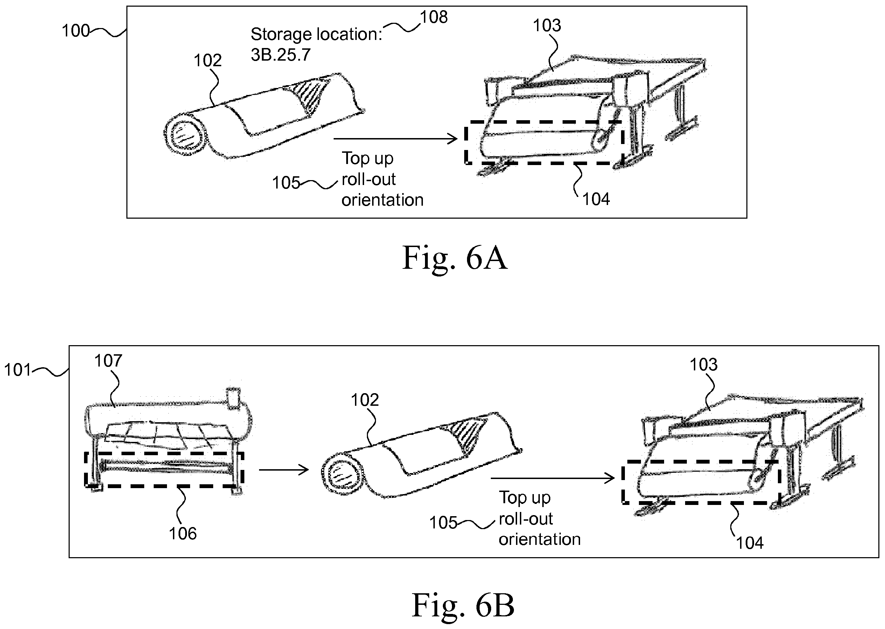

Fig. 6A shows a real-life perspective image 100 comprising a resulting product 102 and input means 104 of a next production module 103. The operator is supported in finding the right input means 104 of the production module 103. An extra instruction 105 is established on the real-life perspective image 100 for instructing the operator how to input the resulting product 102 in the input means 104 of the production module 103. In this case the instruction 105 instructs the operator to input the roll 102 in a top-up way of the roll orientation. The instruction 105 may also comprise further settings to be applied to the production module 103. A storage location 108 is established on the real-life perspective image 100 in order to let the operator search for the resulting product at the correct storage location indicated by room 3B25.7.

Fig. 6B shows a real-life perspective image 101 comprising the resulting product 102, input means 104 corresponding to the next production module 103 and output means 106 corresponding to the production module 107 which has produced the resulting product 102. By showing the output means 106, the operator becomes aware of the location where he can find the resulting product 102 produced by the production module 107. This is advantageous when the production module producing the resulting product has more than one output means, or the production module producing the resulting product is occupying a large amount of floor space.

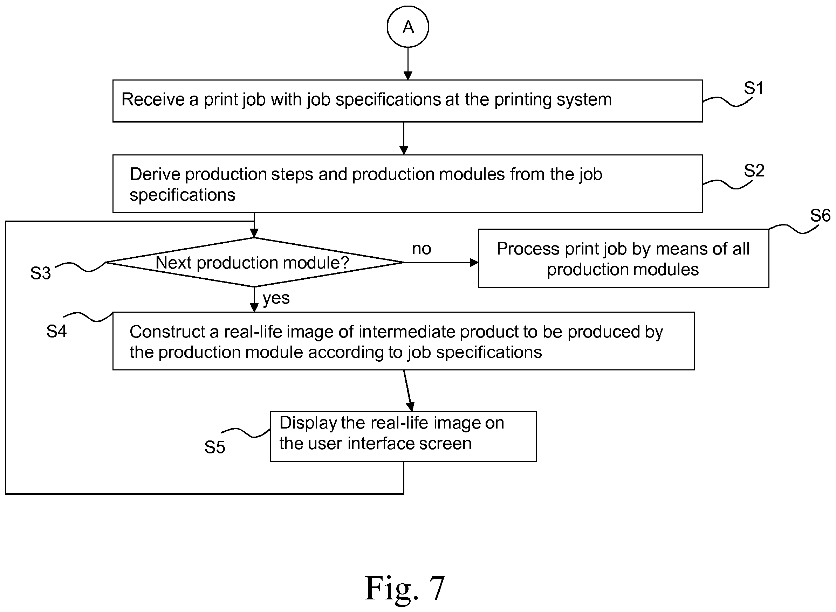

Fig. 7 describes a flow diagram of a first embodiment of the method according to the invention. The method is suitable for printing a print job according to print job specifications by means of a production steps on a printing system. The printing system comprises a plurality of production modules and a user interface. Each production module performs a production step in order to deliver a resulting product. From a starting point A a first step S1 is reached. According to the first step S1 of the method according to the first embodiment a print job is received at the printing system. The print job comprises job specifications and job data at the printing system. Usually the print job is submitted to the control unit of the printing system and added to the print queue. The print job specifications concern print job settings comprising print settings and finishing settings.
According to a second step S2 production steps and corresponding production modules of the printing system are derived from the print job specifications. At least one printing module is among the derived production modules.

In a third step S3 it is checked if there is still a production module which has to be treated. If so, the method proceeds to a fourth step S4.
If not, the print job is processed in a last step S6 by means of all the production modules. The operator has all the real-life perspective images of the resulting products at his disposal and is able to recognise, to identify and to locate a resulting product by means of the real-life perspective image of the resulting product. The operator is able to transport a located resulting product from the production module by which it has been produced to the next production module.
In the fourth step S4 a real-life perspective image of the resulting product to be produced by the production module is constructed by means of the control unit of the printing system. The real-life perspective image of the resulting product is established in accordance with the job specifications.
In a fifth step S5 the real-life perspective image is displayed at a screen of the user interface of the printing system.
In case that the user interface is a printer for printing a hardcopy of operator instructions, the real-life perspective image is printed on the hardcopy. The hardcopy may be a pre-printed work order form. A hardcopy may be printed for each production step. Constructed real-life perspective images may be gathered on at least one hardcopy.
The method returns to point E (See also Fig. 11A) for checking for a next production module to be treated, if any.
The real-life perspective images of the resulting products may be displayed in a sequence order of processing the print job over the production modules. The real-life perspective images may be shown in a scrollable list of images.

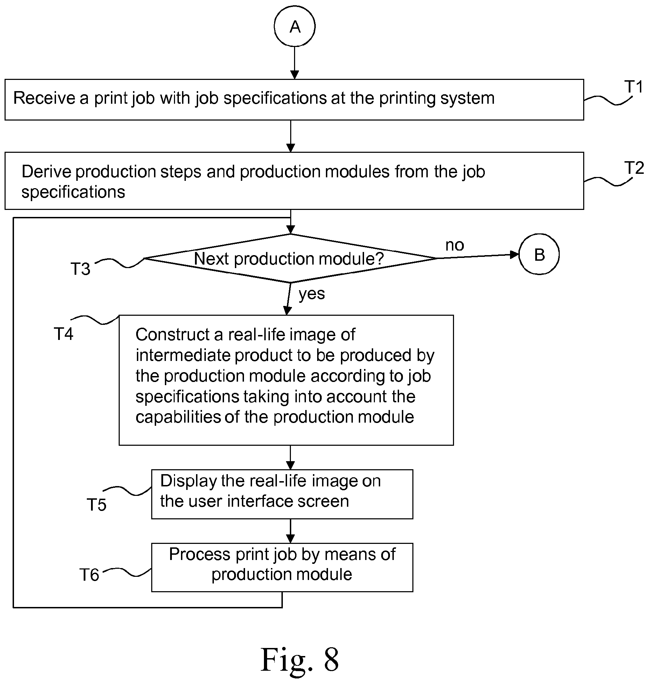

Fig. 8 describes a flow diagram of a second embodiment of the method according to the invention. The difference of the second embodiment with the first embodiment is the fact that the real-life perspective images are produced after a production step is executed. From a starting point A a first step T1 is reached. According to the first step T1 of the method according to the second embodiment a print job is received with job specifications at the printing system. Usually the print job is submitted to the control unit of the printing system and added to the print queue. The print job specifications concern print job settings comprising print settings and finishing settings.
According to a second step T2 production steps and corresponding production modules of the printing system are derived from the print job specifications. At least one printing module is among the derived production modules.
In a third step T3 it is checked if there is still a production module which has to be treated. If not, the print job has been completely processed and the method ends in end point B. If there is still a production module which has to be treated, the method proceeds to a fourth step T4.
According to the fourth step T4 a real-life perspective image of the resulting product to be produced by the production module is constructed. The real-life perspective image of the resulting product is in accordance with the job specifications.
According to a fifth step T5 the constructed real-life perspective image is displayed at a screen of the user interface of the printing system.
According to a sixth step T6 the production module is processing the corresponding part of the print job according to the job specifications. The method returns to the third step T3 for checking for a next production module to be treated.
In this way the operator who sees the real-life perspective image of the intermediate product is able to identify the intermediate product before the next production step is started. The operator is able to bring the intermediate product to the next production module for starting this next production step.

The real-life perspective images of the resulting products may be displayed in a sequence order of processing the print job over the production modules. As soon as a real-life perspective image is constructed it may be added to a displayable and scrollable list of real-life perspective images on the user interface screen or it may be displayed separately on the user interface screen.

The above disclosure is intended as merely exemplary, and not to limit the scope of the invention, which is to be determined by reference to the following claims.

## Claims

1. Method for processing a print job according to print job specifications by means of production steps on a printing system (1), the printing system (1) comprising a plurality of production modules (2,3,4) and a user interface (1a, 5, 8A, 8B, 8C), each production module performing a production step in order to deliver a resulting product of the production step, the resulting product being a cut sheet resulting product, the method comprises the steps of
a) performing a production step by means of a production module of the plurality of production modules delivering the resulting product,
b) establishing a real-life perspective image (20, 30, 50) of the resulting product taking into account the print job specifications, and
c) displaying the real-life perspective image (20, 30, 50) on the user interface (1a, 5, 8A, 8B, 8C),
wherein the real-life perspective image of the cut sheet resulting product comprises an image in perspective representing a stack of cut sheets having a height (22), a width (21) and a length (23), wherein the size of the height (22), the width (21) and the length (23) are in accordance with the job specifications comprising a format of the print job, a weight and/or thickness of a media, and a number of sheets of the print job.

2. Method according to claim 1, wherein each production module comprises input means (104) for receiving the resulting product (102) delivered by the preceding production module, and the real-life perspective image (100) of the resulting product (102) comprises a real-life perspective image of the input means of the production module for which the resulting product is input.

3. Method according to claim 2, wherein the real-life perspective image comprises instructions (105) for the operator how to input the resulting product in the input means and what settings should be entered at the production module having the input means.

4. Method according to claim 2, wherein a production module comprises output means (106), and the real-life perspective image (101) of the resulting product comprises a real-life perspective image of the output means of the production module which has produced the resulting product.

5. Method according to claim 1, wherein the step of displaying the real-life perspective image on the user interface is before the start of the print job.

6. Method according to claim 1, wherein the step of displaying the real-life perspective image on the user interface is during the production of the print job.

7. Method according to claim 1, wherein the real-life perspective image of the resulting product comprises at least one image out of a group of an image comprising actual content to be printed on the first page of the print job, an image comprising actual content to be printed on the last page of the print job, an image comprising a medium on which the print job is printed, the medium comprising an image of actual content to be printed according to the print job, which content is visible when the corresponding resulting product is delivered, an image of a finishing element and an image of a carrier by which at least part of the printed print job is carried.

8. Method according to claim 1, wherein the resulting product is a cut sheet resulting product, the stack height of the resulting product in the real-life image represents a number of sheets of the print job and the stack height of the resulting product in the real-life image is in accordance with a type of media used.

9. Method according to claim 1, wherein the user interface comprises a printer for printing a hardcopy and the real-life perspective image is printed on the hardcopy.

10. A software medium comprising executable program code configured to, when executed, perform the method according to any of the claims 1 - 9.

11. A printing system (1) comprising production modules (2, 3, 4), each production module delivering a resulting product being a cut sheet resulting product, and a user interface (1a, 5, 8A, 8B, 8C) for displaying images, the printing system (1) further comprising
- receiving means for receiving a print job with print job specifications,
- determining means for determining a real-life perspective image (20, 30, 50) of a resulting product according to print job specifications,
wherein the real-life perspective image (20, 30, 50) is displayable on the user interface (1a, 5, 8A, 8B, 8C) before, during or after the printing of the print job,
wherein the real-life perspective image of the resulting product comprises an image in perspective representing a stack of cut sheets having a height (22), a width (21) and a length (23), wherein the size of the height (22), the width (21) and the length (23) are in accordance with the job specifications comprising a format of the print job, a weight and/or thickness of a media, and a number of sheets of the print job.

12. A printing system according to claim 11, wherein the resulting product is a cut sheet resulting product, the stack height of the resulting product in the real-life image represents a number of sheets of the print job and the stack height of the resulting product in the real-life image is in accordance with a type of media used.

## Patentansprüche

1. Verfahren zur Ausführung eines Druckauftrags in Übereinstimmung mit Druckauftragsspezifikationen mit Hilfe von Produktionsschritten an einem Drucksystem (1), wobei das Drucksystem (1) eine Vielzahl von Produktionsmodulen (2, 3, 4) und eine Benutzerschnittstelle (la, 5, 8A, 8B, 8C) aufweist, wobei jedes Produktionsmodul einen Produktionsschritt ausführt, um ein resultierendes Erzeugnis des Produktionsschrittes zu liefern, wobei das resultierende Erzeugnis ein Bogendruckerzeugnis ist, welches Verfahren die folgenden Schritte aufweist:
a) ausführen eines Produktionsschrittes mit Hilfe eines Produktionsmoduls aus der Vielzahl der Produktionsmodule, das das resultierende Erzeugnis liefert,
b) erstellen eines lebensechten perspektivischen Bildes (20, 30, 50) des resultierenden Erzeugnisses unter Berücksichtigung der Druckauftragsspezifikationen, und
c) anzeigen des lebensechten perspektivischen Bildes (20, 30, 50) auf der Benutzerschnittstelle (la, 5, 8A, 8B, 8C),
wobei das lebensechte perspektivische Bild des Bogendruckerzeugnisses ein perspektivisches Bild enthält, das einen Stapel von zugeschnittenen Bögen mit einer Höhe (22), einer Breite (21) und einer Länge (23) zeigt, wobei die Werte der Höhe (22), der Breite (21) und der Länge (23) in Übereinstimmung mit den Druckauftragsspezifikationen sind, die ein Format des Druckauftrages, ein Gewicht und/oder eine Dicke eines Mediums sowie eine Anzahl von Bögen des Druckauftrags angeben.

2. Verfahren nach Anspruch 1, bei dem jedes Produktionsmodul eine Eingabeeinrichtung zum Empfang des resultierenden Erzeugnisses (102) aufweist, das von dem vorangehenden Produktionsmodul geliefert wird, und das lebensechte perspektivische Bild (100) des resultierenden Erzeugnisses (102) ein lebensechtes perspektivisches Bild der Eingabeeinrichtung des Produktionsmoduls enthält, für welche das resultierende Erzeugnis eingegeben wird.

3. Verfahren nach Anspruch 2, bei dem das lebensechte perspektivische Bild Anweisungen (105) für den Operator enthält, wie das resultierende Erzeugnis in die Eingabeeinrichtung einzugeben ist und welche Einstellungen an dem Produktionsmodul vorgenommen werden sollten, das die Eingabeeinrichtung aufweist.

4. Verfahren nach Anspruch 2, bei dem ein Produktionsmodul eine Ausgabeeinrichtung (106) aufweist und das lebensechte perspektivische Bild (101) des resultierenden Erzeugnisses ein lebensechtes perspektivisches Bild der Ausgabeeinrichtung des Produktionsmoduls enthält, das das resultierende Erzeugnis hergestellt hat.

5. Verfahren nach Anspruch 1, bei dem der Schritt der Anzeige des lebensechten perspektivischen Bildes auf der Benutzerschnittstelle vor dem Start des Druckauftrages liegt.

6. Verfahren nach Anspruch 1, bei dem der Schritt der Anzeige des lebensechten perspektivischen Bildes auf der Benutzerschnittstelle während der Produktion des Druckauftrages erfolgt.

7. Verfahren nach Anspruch 1, bei dem das lebensechte perspektivische Bild des resultierenden Erzeugnisses wenigstens ein Bild aus der folgenden Gruppe von Bildern enthält: ein Bild mit aktuell auf die erste Seite des Druckauftrages zu druckendem Inhalt, ein Bild mit aktuell auf die letzte Seite des Druckauftrages zu druckendem Inhalt, ein Bild eines Mediums, auf welches der Druckauftrag gedruckt wird, wobei das Medium ein Bild des aktuell in Übereinstimmung mit dem Druckauftrag zu druckenden Inhalts aufweist, welcher Inhalt sichtbar ist, wenn das entsprechende resultierende Erzeugnis ausgeliefert wird, ein Bild eines Finisher-Elements, und ein Bild eines Trägers, von dem zumindest ein Teil des gedruckten Druckauftrages getragen wird.

8. Verfahren nach Anspruch 1, bei dem das resultierende Erzeugnis ein Bogendruckerzeugnis ist, die Stapelhöhe des resultierenden Erzeugnisses in dem lebensechten Bild eine Anzahl von Bögen des Druckauftrages repräsentiert und die Stapelhöhe des resultierenden Erzeugnisses in dem lebensechten Bild in Übereinstimmung mit einem verwendeten Medientyp ist.

9. Verfahren nach Anspruch 1, bei dem die Benutzerschnittstelle einen Drucker zum Drucken einer physischen Kopie aufweist und das lebensechte perspektivische Bild auf die Kopie gedruckt wird.

10. Softwaremedium mit ausführbarem Programmcode, der, wenn er ausgeführt wird, das Verfahren nach einem der Ansprüche 1 bis 9 ausführt.

11. Drucksystem (1) mit Produktionsmodulen (2, 3, 4), wobei jedes Produktionsmodul ein resultierendes Erzeugnis liefert, bei dem es sich um ein Bogendruckerzeugnis handelt, und mit einer Benutzerschnittstelle (la, 5, 8A, 8B, 8C) zur Anzeige von Bildern, welches Drucksystem (1) weiterhin aufweist:
- eine Empfangseinrichtung zum Empfang eines Druckauftrages mit Druckauftragsspezifikationen,
- eine Bestimmungseinrichtung zur Bestimmung eines lebensechten perspektivischen Bildes (20, 30, 50) eines resultierenden Erzeugnisses in Übereinstimmung mit den Druckauftragsspezifikationen,
wobei das lebensechte perspektivische Bild (20, 30, 50) auf der Benutzerschnittstelle (la, 5, 8A, 8B, 8C) vor, während oder nach dem Drucken des Druckauftrags anzeigbar ist, wobei das lebensechte perspektivische Bild des resultierenden Erzeugnisses ein Bild enthält, das perspektivisch einen Stapel von zugeschnittenen Bögen zeigt, der eine Höhe (22), eine Breite (21) und eine Länge (23) hat, wobei die Werte der Höhe (22), der Breite (21) und der Länge (23) in Übereinstimmung mit den Auftragsspezifikationen sind, die ein Format des Druckauftrags, ein Gewicht und/oder eine Dicke eines Mediums und eine Anzahl von Bögen des Druckauftrags angeben.

12. Drucksystem nach Anspruch 11, bei dem das resultierende Erzeugnis ein Bogendruckerzeugnis ist, die Stapelhöhe des resultierenden Erzeugnisses in dem lebensechten Bild eine Anzahl von Bögen des Druckauftrags repräsentiert und die Stapelhöhe des resultierenden Erzeugnisses in dem lebensechten Bild in Übereinstimmung mit einem verwendeten Medientyp ist.

## Revendications

1. Procédé de traitement d'un travail d'impression en fonction de spécifications de travail d'impression au moyen d'étapes de production sur un système d'impression (1), le système d'impression (1) comprenant une pluralité de modules de production (2, 3, 4) et une interface utilisateur (la, 5, 8A, 8B, 8C), chaque module de production effectuant une étape de production de manière à délivrer un produit résultant de l'étape de production, le produit résultant étant un produit résultant de feuilles coupées, le procédé comprend les étapes suivantes
a) l'exécution d'une étape de production au moyen d'un module de production de la pluralité de modules de production délivrant le produit résultant,
b) l'établissement d'une image en perspective de vie réelle (20, 30, 50) du produit résultant en tenant compte des spécifications de travail d'impression, et
c) l'affichage de l'image en perspective de vie réelle (20, 30, 50) sur l'interface utilisateur (la, 5, 8A, 8B, 8C),
dans lequel l'image en perspective de vie réelle du produit résultant de feuilles coupées comprend une image en perspective représentant une pile de feuilles coupées ayant une hauteur (22), une largeur (21) et une longueur (23), dans lequel la taille de la hauteur (22), la largeur (21) et la longueur (23) sont conformes aux spécifications de travail comprenant un format du travail d'impression, un poids et/ou une épaisseur d'un support, et un nombre de feuilles du travail d'impression.

2. Procédé selon la revendication 1, dans lequel chaque module de production comprend un moyen d'entrée (104) pour recevoir le produit résultant (102) délivré par le module de production précédent, et l'image en perspective de vie réelle (100) du produit résultant (102) comprend une image en perspective de vie réelle du moyen d'entrée du module de production pour lequel le produit résultant est entré.

3. Procédé selon la revendication 2, dans lequel l'image en perspective de vie réelle comprend des instructions (105) pour l'opérateur sur comment entrer le produit résultant dans le moyen d'entrée et quels réglages devraient être entrés au niveau du module de production ayant le moyen d'entrée.

4. Procédé selon la revendication 2, dans lequel un module de production comprend un moyen de sortie (106) et l'image en perspective de vie réelle (101) du produit résultant comprend une image en perspective de vie réelle du moyen de sortie du module de production qui a produit le produit résultant.

5. Procédé selon la revendication 1, dans lequel l'étape d'affichage de l'image en perspective de vie réelle sur l'interface utilisateur est avant le début du travail d'impression.

6. Procédé selon la revendication 1, dans lequel l'étape d'affichage de l'image en perspective de vie réelle sur l'interface utilisateur est durant la production du travail d'impression.

7. Procédé selon la revendication 1, dans lequel l'image en perspective de vie réelle du produit résultant comprend au moins une image parmi un groupe d'une image comprenant un contenu effectif à imprimer sur la première page du travail d'impression, d'une image comprenant un contenu effectif à imprimer sur la dernière page du travail d'impression, d'une image comprenant un support sur lequel le travail d'impression est imprimé, le support comprenant une image d'un contenu actuel à imprimer en fonction du travail d'impression, lequel contenu est visible quand le produit résultant correspondant est délivré, d'une image d'un élément de finition et d'une image d'un porteur par lequel au moins une partie du travail d'impression imprimé est portée.

8. Procédé selon la revendication 1, dans lequel le produit résultant est un produit résultant de feuilles coupées, la hauteur de pile du produit résultant dans l'image de vie réelle représente un nombre de feuilles du travail d'impression et la hauteur de pile du produit résultant dans l'image de vie réelle est conforme à un type de support utilisé.

9. Procédé selon la revendication 1, dans lequel l'interface utilisateur comprend une imprimante pour imprimer un document papier et l'image en perspective de vie réelle est imprimée sur le document papier.

10. Support de logiciel comprenant un code de programme exécutable configuré pour, quand il est exécuté, effectuer le procédé selon l'une quelconque des revendications 1 à 9.

11. Système d'impression (1) comprenant des modules de production (2, 3, 4), chaque module de production délivrant un produit résultant qui est un produit résultant de feuilles coupées, et une interface utilisateur (la, 5, 8A, 8B, 8C) pour afficher des images, le système d'impression (1) comprenant en outre
- un moyen de réception pour recevoir un travail d'impression avec des spécifications de travail d'impression,
- un moyen de détermination pour déterminer une image en perspective de vie réelle (20, 30, 50) d'un produit résultant en fonction de spécifications de travail d'impression,
dans lequel l'image en perspective de vie réelle (20, 30, 50) est affichable sur l'interface utilisateur (la, 5, 8A, 8B, 8C) avant, durant ou après l'impression du travail d'impression,
dans lequel l'image en perspective de vie réelle du produit résultant comprend une image en perspective représentant une pile de feuilles coupées ayant une hauteur (22), une largeur (21) et une longueur (23), dans lequel la taille de la hauteur (22), la largeur (21) et la longueur (23) sont conformes aux spécifications de travail comprenant un format du travail d'impression, un poids et/ou une épaisseur d'un support, et un nombre de feuilles du travail d'impression.

12. Système d'impression selon la revendication 11, dans lequel le produit résultant est un produit résultant de feuilles coupées, la hauteur de pile du produit résultant dans l'image de vie réelle représente un nombre de feuilles du travail d'impression et la hauteur de pile du produit résultant dans l'image de vie réelle est conforme à un type de support utilisé.
